# EUROPEAN PATENT SPECIFICATION

(11) **EP 1 864 706 B1**
(45) Date of publication and mention of the grant of the patent: **13.06.2012**
(21) Application number: 07007271.5
(22) Date of filing: 06.04.2007
(51) Int. Cl.: B01D 15/38, B01J 20/32, B01D 67/00

(54) **Apparatus for the purification of organic molecules and relevant method of manufacture**
Vorrichtung zum Reinigen organischer Moleküle und entsprechendes Herstellungsverfahren
Appareil pour la purification de molécules organiques et procédé de fabrication correspondant

(30) Priority: 09.06.2006 IT MO20060182
(43) Date of publication of application: 12.12.2007
(73) Proprietor: GENERON S.r.l., 41126 Santa Maria di Mugnano (MO) (IT)
(72) Inventor: Gatti, Marcello, 41058 Vignola (MO) (IT)
(74) Representative: Brunacci, Marco

(56) References cited:
- EP-A- 0 332 323
- WO-A-2004/035199
- US-A- 5 362 859
- US-A- 5 719 269
- US-B2- 6 610 630

## Description

The present invention relates to an apparatus for the purification of organic molecules and relevant method of manufacture.

The use is known of purification systems for organic molecules such as mycotoxins, antibiotics, vitamins, pesticides, etc.

The known systems are generally based on the principle of purification of immunoaffinities or on the principle of purification by chemical-physical affinities, whereby the organic molecule to be analysed is separated from the base mix of which it is part by immunoaffinity, chemical and/or physical affinity with the system, the chemical-physical characteristics of which are fixed *a priori.*

The chemical-physical characteristics used for the separation are, *inter alia,* the following: ionic exchange, steric or weight hindrance, pH, immunoaffinity, electric charge unbalance, electrostatic separation.

Generally speaking, the purification systems available on the market are in the form of apparatus, commonly known as "columns" or "small columns".

Such apparatuses generally have an outer case of polymeric material, substantially cylindrical, open at the ends, and internally defining a transit duct for the base mix containing, *inter alia,* the organic molecules to be purified.

Inside the duct, a substantially solid and permeable support is fixed to which are bound agents such as antibodies or the like suitable for trapping organic molecules during base mix transit.

The organic molecules are therefore trapped inside the support, binding themselves to this, and are subsequently released following subsequent introduction, inside the duct, of a fluid suitable for detaching from the support the molecules trapped on it. This sequence of operations permits collecting, downstream of the apparatus, the purified organic molecules for subsequent analytic phases.

These known apparatuses have a number of drawbacks, in particular, the columns used are generally disposable, i.e., they are only able to perform just one purification process due to the total or partial drop in binding capacity between the support and the molecules to be purified or to other causes of a chemical or physical nature.

From patent document EP-A-0 332 323 is known a carrier for affinity chromatography which comprises an insoluble carrier and antibodies which are modified by activated polyethyleneglycol (PEG) and immobilized on the insoluble carries, and which is used continuously without loss of their activity.

However even this known carrier for affinity chromatography appear to require further improvemets.

The main aim of the present invention is to provide an apparatus for the purification of organic molecules that can be reused to perform several successive purification processes.

Within the sphere of this technical aim, another object of this invention is to cater for the above aims with a simple structure, of relatively practical implementation, safe to use and with effective operation, as well as having a relatively low cost.

The above objects are all achieved by the present apparatus for the purification of organic molecules, comprising a hollow body of substantially elongated shape, open at the ends and internally defining at least one transit duct for a fluid mix, at least one functionalised permeable support housed inside said duct and having a basic permeable material to which is associated at least one chemical agent suitable for trapping, during the transit of said mix, at least one organic molecule to be purified, characterized in that said chemical agent is associated with said basic permeable material by chemical reaction between a first functional group on the molecular structure of said chemical agent and a second functional group on at least one between the molecular structure of said basic permeable material and the molecular structure of a binder associable with said basic permeable material, said first functional group and said second functional group being selected between an aminic functional group, a carboxylic functional group, a succinimidic functional group, a thiolic functional group or a maleimidic functional group.

Further characteristics and advantages of the present invention will appear even more evident from the detailed description of a preferred, but not exclusive, embodiment of an apparatus for the purification of organic molecules, illustrated indicatively by way of non limiting example, in the attached drawings wherein:
figure 1 is a schematic and side view of the apparatus according to the invention;
figure 2 is a view of the apparatus according to the invention to which is fitted a pair of pre-purification supplementary apparatuses;
figures 3, 4, 5 and 6 illustrate four distinct phases of the purification process of an organic molecule by means of the apparatus according to the invention.

With special reference to such figures, an apparatus for the purification of a sample of organic molecules O has been globally designated by reference number 1.

The apparatus 1 is of the so-called "column" type, and can be used, for example, for the purification of organic molecules O before carrying out specific laboratory analyses or tests.

The apparatus 1 comprises a hollow body 2, of substantially elongated shape and open at the ends, which internally defines a transit duct for a fluid mix M.

In particular, the hollow body 2 has a substantially cylindrical shape and has, at one end, a inflow first opening 2a for the inflow of the M mix and, at the opposite end, a outflow second opening 2b.

The hollow body 2 can be made of polymeric type material and can have a capacity between 0.1 ml and 10,000 ml.

Furthermore, different shapes of the hollow body 2 cannot be ruled out with different number or arrangement of the first and/or of the second openings 2a and 2b.

The apparatus comprises a functionalised permeable support S housed inside the duct of the hollow body 2.

The functionalised permeable support S in its definitive shape is made up of a basic permeable material 3 to the surface of which is bound a chemical agent 5 suitable for trapping the organic molecules O to be purified, during transit of the mix M.

Usefully, a binder 4 can be placed in between the basic permeable material 3 and the chemical agent 5. The presence of the binder 4 can ensure more stable binding or, in any case, a mediated reaction more efficient and chemically and kinematically favoured compared to a direct reaction between the basic permeable material 3 and the chemical agent 5.

In particular, the chemical agent 5 is associated with the basic permeable material 3 by chemical reaction between a first functional group on the molecular structure of the chemical agent 5 and a second functional group on the molecular structure of the basic permeable material 3 or on the molecular structure of the binder 4 associated with the basic permeable material 3.

Alternatively, the binder 4 can be associated with the basic permeable material 3 following the reaction with the chemical agent 5.

In particular, the chemical agent 5 is associated with the binder 4 or directly with the basic permeable material 3 by chemical reaction between the first functional group, composed of an aminic functional group, and the second functional group, composed of a succinimidic, functional group.

In detail and for the purposes of the present invention, the functional groups described above are intended of the type of : an aminic functional group characterising the class of compounds of the primary secondary and tertiary amines and of general formula -NH₂, -NHR or -NRR'; an imidic functional group composed of two acyl groups bound to an atom of nitrogen such as that characterising the class of compounds of the imides (e.g., the succinimide and the maleimide, herein also called succinimidic/s and meleimidic/s).

Usefully, in the event of the binder 4 being used, the chemical reactions between the first and the second functional group described above are the same used to bind the binder 4 to the basic permeable material 3 to complete the functionalised permeable support S.

The basic permeable material 3 is of the type of a porous material in the substantially solid state and can comprise agarose, in particular modified agarose (of the Sepharose^{™} or Sepharose^{™} Fast Flow type or the like) or, alternatively, it can comprise a metal, a semi-metal, a metal oxide, a protein or a peptide or a mix of these however compounded.

In detail, the molecular structure of the binder 4 can be composed in its definitive form (i.e., after the reactions described above) by a single atom of carbon, sulphur or nitrogen or, alternatively, it can be composed of a chain of linear carbon atoms, branched, saturated, monounsaturated or polyunsaturated, including substituted by hetero-atoms.

Advantageously, the succinimidic functional groups can be of the type present in the succinimidyl esters such as, for example, N-hydroxysuccinimide (NHS) ester, etc. The chemical agent 5 suitable for trapping the organic molecules O can be made up of an antibody.

In general, the chemical agent 5 has in any case at least one aminic functional group (primary, secondary or tertiary) suitable for reacting with at least one among the functional groups of the binder 4 or of the basic permeable support 3 and a further reactive site or functional group able to bind to the organic molecules 0 to be purified or with which to interact.

In general, the molecules of the chemical agent 5 are able to bind with other molecules in certain chemical-physical conditions; more specifically, such chemical-physical conditions are determined simultaneously by the type of organic molecule O to be purified and by the chemical agent 5 itself.

Advantageously, the organic substances O that can be selectively trapped by the chemical agent 5, and which are therefore purifiable by means of the apparatus 1, comprise the molecules belonging to the following categories:
- mycotoxins such as, for example, alpha toxin (B1, B2, G1, G2, M1 and M2), zearalenone, fumosine (B1 and B2), trichothecines, deoxynivalenol, ochratoxin A, toxin T2, toxin HT2, and other toxins;
- antibiotics such as, for example, gentamicin, tylosin, streptomycin, dehydrostreptomycin, Chloramphenicol and other antibiotics;

- vitamins (B1, B2, B3_{;} M, H, B12 and other vitamins);
- anabolic steroids;
- steroids;
- beta-agonists.

Usefully, the apparatus 1 comprises blocking means 6 for blocking the functionalised permeable support S inside the duct of the hollow body 2.

In particular, the blocking means 6 are composed of two porous membranes fitted to measure inside such duct at two opposite surfaces of the functionalised permeable support S.

The porous membranes 6 can have a porosity between 0.45 microns and 500 microns. Before being used for the purification of an organic molecule O, the hollow body 2 contains a stabilising fluid 7 suitable for maintaining suitable chemical conditions inside the duct, and the first and the second openings 2a and 2b are hermetically closed by means of seal closing means 8, of the cap type or the like.

Advantageously, upstream of the apparatus 1, a supplementary apparatus 9 can be fitted for pre-purifying the mix M.

In particular, the supplementary apparatus 9 comprises an outer case 10 of substantially tubular shape, suitable for the transit of the mix M and having at least one first end 10a open and associable by interlocking at the first opening 2a of the hollow body 2 and a second end 10b open and suitable for introducing the mix M.

Inside the case 10 is housed a permeable element 11 suitable for being crossed by the mix M and which supports anti-oxidative, antibiotic substances, etc.

The permeable element 11 is made using materials such as agarose, in particular agarose gel (of the Sepharose^{™} or Sepharose^{™} Fast Flow type), a metal, a semi-metal, a metal oxide, silica or alumina.

Usefully, the supplementary apparatus 9 comprises retention means for retaining the permeable element 11 inside the case 10.

In particular, the retention means are composed of two porous membranes fitted to measure inside such case 10 at two opposite surfaces of the permeable element 11. Such porous membranes can have a porosity between 0.45 microns and 1000 microns. Before the supplementary apparatus 9 is used for the pre-purification of the mix M, the case 10 contains a stabilising fluid suitable for maintaining suitable chemical conditions, and is closed hermetically by means of seal closing means, of the cap type or the like.

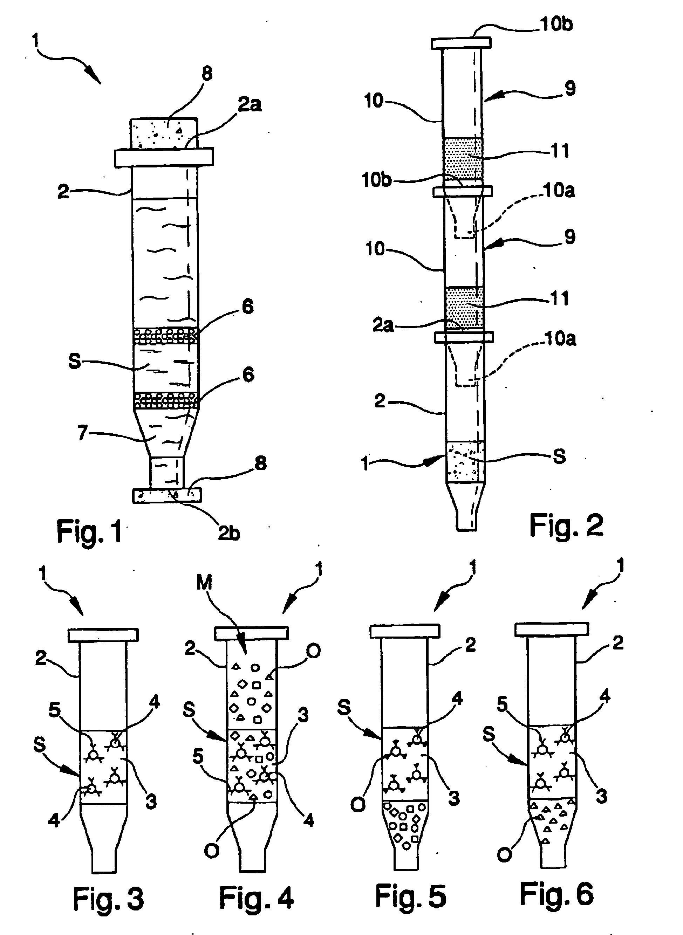

Advantageously, as shown in figure 2, two supplementary apparatuses 8 can be associated together in series (by interlocking the first end 10a of one of these in the second end 10b of the other) and fitted upstream of the apparatus for the execution of a further and possibly different phase of pre-purification of the mix M.

With particular but not exclusive reference to the first embodiment of the invention described above, the method for manufacturing the device 1 comprises a preliminary sample phase of a predefined quantity (e.g., 1 g) of basic permeable material 3 having, for example, carboxylic functional groups on the surface.

The subsequent activation of the surface of the basic permeable material consists in adding a predefined quantity (e.g., 2 ml) of a solution comprising 0.5 M of N-ethyl-N'-dimethylaminopropyl-carbodiimide (EDC) for 0.1 M of N-hydroxysuxinimide (NHS), in mixing, and in leaving the solution in contact with the basic permeable material 3 for at least 2 hours in adequate pH conditions (e.g., pH 7.4).

The basic permeable material 3 thus activated is then centrifuged and washed to eliminate the supernatant.

The method then comprises a phase that consists in introducing a predetermined quantity of chemical agent 5 (in this case functionalised with aminic groups) and in leaving it in contact with the binder 4 for at least 2 hours at a suitable temperature (e.g., 25°C).

This way there is a binding chemical reaction between the aminic functional groups of the chemical agent 5 and the succinimidic functional groups that allows manufacturing the functionalised permeable support S.

Following a further washing phase and any modification of the pH, a predefined quantity of functionalised permeable support S is introduced inside the duct of the hollow body 2.

Alternatively, to prepare the functionalised permeable support S, a basic permeable material 3 can be used, of the type described above, already having the succinimmidic groups or, in any case, already having bound succinimmidic functional groups by interposition of a binder 4.

The subsequent preparation phases are performed in the same way described above after possible acidification with diluted strong acid and subsequent correction of the pH to bring this to the reaction conditions (e.g., pH 7.4). The chemical agent 5, suitable for entrapment, is then added, having at least one aminic functional group and is left to react for about 2 hours at room temperature. The whole is washed, if necessary with organic solvents, and the functionalised permeable support S thus obtained is then inserted inside the hollow body 2 as described above.

The operation of the apparatus 1 is as follows.

A preliminary phase involves the removal of the caps 8 from the first and from the second openings 2a and 2b, and the emptying of the stabilising fluid 7 from the duct of the hollow body 2.

The apparatus 1 prepared in this way, shown in figure 3, can be used to execute the process of purification of the organic molecule O.

As shown in figure 4, the mix M comprising the organic molecules O to be purified is introduced inside the hollow body 2 through the first opening 2a and moves towards the second opening 2b through the porosities of the functionalised permeable support S.

As shown in figure 5, upon the transit of the mix M the chemical agent 5, which is fixed to the functionalised permeable support S, interacts with the organic molecules O and traps these.

The mix M thus deprived of the organic molecules O comes out of the second opening 2b.

A last phase, shown in figure 6, involves the introduction through the first opening 2a of a fluid suitable for detaching the organic molecules O trapped by the chemical agent 5, subsequently collected downstream of the apparatus 1.

Following such purification process, the apparatus 1 can be used again for further processes, in the same way as has been described above, or, alternatively, it can be filled again by means of the stabilising fluid 7 and hermetically closed by means of the caps 8 for subsequent reuses.

In case of use of one or more supplementary apparatuses 9 the process is repeated in the same way as described above, with the execution of additional pre-purification processes upon transit of the mix M inside the cases 10, at the permeable elements 11. The supplementary apparatuses 9 and 10, unlike the apparatus 1, are generally of the disposable type.

It has in fact been ascertained how the described invention achieves the set objects, and in particular the fact is underlined that the apparatus permits the execution of more than one organic substance purification process.

The possibility of reusing the apparatus further permits considerably cutting the general costs of execution of the purification processes, compared to the traditional processes performed using the known disposable apparatus.

The invention thus conceived is susceptible of numerous modifications and variations, all of which falling within the scope of the inventive concept. Furthermore all the details may be replaced by other elements which are technically equivalent.

In practice, the contingent shapes and dimensions may be any according to requirements without because of this moving outside the protection scope of the following claims,

## Claims

1. Apparatus (1) for the purification of organic molecules (O) selected from mycotoxins, antibiotics, vitamins, anabolic steroids, steroids, beta-agonists, comprising:
a hollow body (2) of substantially elongated shape, open at the ends and internally defining at least one transit duct for a fluid mix (M) containing said organic molecules (O),
at least one functionalised permeable support (S) housed inside said duct and having a basic permeable material (3) to which is associated at least one chemical agent (5) suitable for trapping, during the transit of said mix (M), said organic molecules (0) to be purified,
wherein said chemical agent(5) is associated with said basic permeable material (3) by chemical reaction between a first functional group on the molecular structure of said chemical agent (5) and a second functional group on at least one of the molecular structure of said basic permeable material (3) and the molecular structure of a binder (4') placed in between said basic permeable material (3) and said chemical agent (5),
**characterized in that** said chemical agent is an antibody, said first functional group is an aminic functional group and said second functional group is a succinimidic functional group,
whereby said apparatus (1) permits the execution of a plurality of processes for the purification of said organic molecules (9).

2. Apparatus according to claim 1, **characterized in that** said aminic functional group is a primacy, secondary or tertiary aminic group of general formula respectively -NH₂, -NHR and -NRR' and said succinimidic functional group is of the type present in an N-hydroxysuccinimide(NHS) ester or other similar compounds:

3. Apparatus according to claim 1, **characterized in that** said basic permeable material is of the type of a substantially solid porous material.

4. Apparatus according to claim 1, **characterized in that** said basic permeable material is selected from the group comprising: agarose, metals, semi-metals or metal oxides, proteins or peptides.

5. Apparatus according to claim 1, **characterized in that** said basic permeable material comprises modified agarose gel,

6. Apparatus according to claim 1, **characterized in that** said hollow body comprises at least one inflow first opening of said mix.

7. Apparatus according to claim 1, **characterized in that** said hollow body comprises at least one outflow second opening of said mix deprived of said trapped organic molecules.

8. Apparatus according to claim 1, **characterized in that** said hollow body has a substantially cylindrical shape.

9. Apparatus according to claim 1, **characterized in that** said hollow body is made of polymeric material.

10. Apparatus according to claim 1, **characterized in that** it comprises blocking means for blocking said basic permeable material inside said duct.

11. Apparatus according to claim 10, **characterized in that** said blocking means comprise at least one porous membrane fitted to measure inside said duct near said basic permeable material.

12. Apparatus according to claim 11, **characterized in that** said blocking means comprise at least two of said porous membranes fitted inside said duct at opposite surfaces of said basic permeable material.

13. Apparatus according to claim 1, **characterized in that** said hollow body contains a stabilising fluid suitable for maintaining suitable chemical conditions inside said duct, before the transit of said fluid mix.

14. Apparatus according to claims 6 and 7, **characterized in that** it comprises seal closing means for closing at least one between said first opening and said second opening.

15. Apparatus according to claim 14, **characterized in that** said seal closing means are of the cap type or the like.

16. Apparatus according to claim 1, **characterized in that** it is associable with at least one supplementary apparatus for pre-purifying said mix.

17. Apparatus according to claim 16, **characterized in that** said supplementary apparatus comprises a substantially tubular case, suitable for the transit of said fluid mix, and having at least one end associable with said first opening.

18. Apparatus according to claim 16, **characterized in that** said supplementary apparatus comprises at least one permeable element housed inside said tubular element and supporting anti-oxidative, antibiotic substances, etc.

19. Apparatus according to claim 16, **characterized in that** a plurality of said supplementary apparatuses are functionally associable in series with each other, upstream of said hollow body.

20. Apparatus according to claim 1, **characterized in that** the molecular structure of said binder comprises at least one between a single atom of carbon, sulphur or nitrogen, or a chain of linear carbon atoms, branched, saturated, monounsaturated or polyunsaturated, including substituted by hetero-atoms.

21. Method for manufacturing an apparatus for the purification of organic molecules (O) selected from mycotoxins, antibiotics, vitamins, anabolic steroids, steroids, beta-agonists, comprising the following steps:
- providing a hollow body (2) of substantially elongated shape, open at the ends and internally defining at least one transit duct for a fluid mix (M) containing said organic molecules (O);
- supplying a predefined quantity of a basic permeable material (3); and
- associating a chemical agent (5) with said basic permeable material (3) for manufacturing a functionalised permeable support (S) to be housed in said hollow body (2), said chemical agent (5) being suitable for trapping at least one type of said organic molecules (O) during the transit of said mix (M),
wherein said associating step comprises a chemical reaction between a first functional group on the molecular structure of said chemical agent (5) and a second functional group on at least one of the molecular structure of said basic permeable material (3) and the molecular structure of a binder (4) placed in between said basic permeable material (3) and said chemical agent (5),
said method being **characterized in that** said chemical agent is an antibody, said first functional group is an aminic functional group and said second functional group is a succinimidic functional group,
whereby said apparatus (1) permits the execution of a plurality of processes for the purification of said organic molecules (O).

22. Method according to claim 21, wherein said aminic functional group is a primary, secondary or tertiary aminic group of general formula respectively -NH₂, -NHR and -NRR' and said succinimidic functional group is of the type present in an N-hydroxysuccinimide (NHS) ester or other similar compounds.

23. Method according to one or more of the claims 21 and 22, **characterized in that** said supplying comprises sampling a predefined quantity of said basic permeable material and activating the surface of said basic permeable material.

24. Method according to one or more of the claims from 21. to 23, **characterized in that** said activating comprises adding a solution comprising a predefined quantity of N-ethyl-N'- dimethylaminopropyl-carbodiimide (EDC) and a predefined quantity of N-hydroxysuccinimide (NHS) or the like.

25. Method according to one or more of the claims from 21 to 24, **characterized in that** it comprises centrifuging said basic permeable material.

26. Method according to one or more of the claims from 21 to 25, **characterized in that** it comprises centrifuging said basic permeable material having said binder.

27. Method according to one or more of the claims from 21 to 26, **characterized in that** it comprises leaving said chemical agent in contact with said binder for a predefined time.

28. Method according to one or more of the claims from-21 to 27, **characterized in that** it comprises leaving said chemical agent in contact with said basic permeable material for a predefined time.

29. Method according to one or more of the claims from 21 to 28, **characterized in that** it comprises introducing a predefined quantity of said functionalised permeable support inside a hollow body of substantially elongated shape and open at the ends by at least one transit duct for a fluid mix.

30. Method according to one or more of the claims from 21 to 29, **characterized in that** said basic permeable material is of the type of a substantially solid porous material.

31. Method according to one or more of the claims from 21 to 30, **characterized in that** said basic permeable material is selected from the group comprising: agarose, metals, semi-metals or metal oxides, proteins or peptides.

## Patentansprüche

1. Vorrichtung (1) zum Reinigen organischer Moleküle (O), die ausgewählt sind aus Mykotoxinen, Antibiotika, Vitaminen, anabolen Steroiden, Steroiden, Beta-Agonisten, enthaltend:
einen Hohlkörper (2) mit im Wesentlichen länglicher Form, der an den Enden offen ist und im Inneren mindestens einen Durchtrittskanal für ein die organischen Moleküle (O) enthaltendes Fluidgemisch (M) bildet,
mindestens einen funktionalisierten permeablen Träger (S), der innerhalb des Kanals angeordnet ist und ein permeables Basismaterial (3) hat, mit welchem mindestens ein chemischer Wirkstoff (5) verbunden ist, der dafür geeignet ist, während des Durchlaufs des Gemisches (M) die zu reinigenden organischen Moleküle (O) festzuhalten,
wobei der chemische Wirkstoff (5) mit dem permeablen Basismaterial (3) durch eine chemische Reaktion zwischen einer ersten funktionellen Gruppe an der Molekularstruktur des chemischen Wirkstoffs (5) und einer zweiten funktionellen Gruppe an mindestens einer der Molekularstruktur des permeablen Basismaterials (3) und der Molekularstruktur eines Bindemittels (4), welches zwischen dem permeablen Basismaterial (3) und dem chemischen Wirkstoff (5) platziert ist, verbunden ist,
**dadurch gekennzeichnet, dass** der chemische Wirkstoff ein Antikörper ist, die erste funktionelle Gruppe eine aminische funktionelle Gruppe ist und die zweite funktionelle Gruppe eine succinimidische funktionelle Gruppe ist,
wodurch die Vorrichtung (1) die Durchführung einer Vielzahl von Prozessen zum Reinigen der organischen Moleküle (O) erlaubt.

2. Vorrichtung nach Anspruch 1, **dadurch gekennzeichnet, dass** die aminische funktionelle Gruppe eine primäre, sekundäre oder tertiäre aminische Gruppe mit der allgemeinen Formel -NH2, -NHR bzw. -NRR' ist und die succinimidische funktionelle Gruppe dem Typ entspricht, der in einem N-Hydroxysuccinimidester (NHS) oder anderen ähnlichen Verbindungen vorhanden ist.

3. Vorrichtung nach Anspruch 1, **dadurch gekennzeichnet, dass** das permeable Basismaterial dem Typ eines im Wesentlichen festen porösen Materials entspricht.

4. Vorrichtung nach Anspruch 1, **dadurch gekennzeichnet, dass** das permeable Basismaterial ausgewählt ist aus der Gruppe enthaltend: Agarose, Metalle, Halbmetalle oder Metalloxide, Proteine oder Peptide.

5. Vorrichtung nach Anspruch 1, **dadurch gekennzeichnet, dass** das permeable Basismaterial modifiziertes Agarosegel enthält.

6. Vorrichtung nach Anspruch 1, **dadurch gekennzeichnet, dass** der Hohlkörper mindestens eine erste Öffnung für den Zufluss des Gemisches aufweist.

7. Vorrichtung nach Anspruch 1, **dadurch gekennzeichnet, dass** der Hohlkörper mindestens eine zweite Öffnung für den Abfluss des Gemisches aufweist, dem die festgehaltenen organischen Moleküle entzogen wurden.

8. Vorrichtung nach Anspruch 1, **dadurch gekennzeichnet, dass** der Hohlkörper eine im Wesentlichen zylindrische Form hat.

9. Vorrichtung nach Anspruch 1, **dadurch gekennzeichnet, dass** der Hohlkörper aus Polymermaterial hergestellt ist.

10. Vorrichtung nach Anspruch 1, **dadurch gekennzeichnet, dass** sie eine Blockiereinrichtung zum Blockieren des permeablen Basismaterials innerhalb des Kanals aufweist.

11. Vorrichtung nach Anspruch 10, **dadurch gekennzeichnet, dass** die Blockiereinrichtung mindestens eine poröse Membran aufweist, die auf Maß in das Innere des Kanals nahe dem permeablen Basismaterial eingesetzt ist.

12. Vorrichtung nach Anspruch 11, **dadurch gekennzeichnet, dass** die Blockiereinrichtung mindestens zwei poröse Membranen aufweist, die an entgegengesetzten Oberflächen des permeablen Basismaterials in das Innere des Kanals eingesetzt sind.

13. Vorrichtung nach Anspruch 1, **dadurch gekennzeichnet, dass** der Hohlkörper ein Stabilisierungsfluid enthält, welches zur Aufrechterhaltung von geeigneten chemischen Bedingungen innerhalb des Kanals vor dem Durchlauf des Fluidgemischs geeignet ist.

14. Vorrichtung nach Ansprüche 6 und 7, **dadurch gekennzeichnet, dass** eine Dichtungsverschlusseinrichtung zum verschließen mindestens einer der ersten Öffnung und der zweiten Öffnung aufweist.

15. Vorrichtung nach Anspruch 14, **dadurch gekennzeichnet, dass** die Dichtungsverschlusseinrichtung dem Kappentyp oder dergleichen entspricht.

16. Vorrichtung nach Anspruch 1, **dadurch gekennzeichnet, dass** sie mit mindestens einer ergänzenden Vorrichtung zur vorreinigung des Gemisches verbindbar ist.

17. Vorrichtung nach Anspruch 16, **dadurch gekennzeichnet, dass** die ergänzende Vorrichtung ein im Wesentlichen rohrförmiges Gehäuse aufweist, welches für den Durchlauf des Fluidgemischs geeignet ist, und mindestens ein mit der ersten Öffnung verbindbares Ende hat.

18. Vorrichtung nach Anspruch 16, **dadurch gekennzeichnet, dass** die ergänzende Vorrichtung mindestens ein permeables Element aufweist, das innerhalb des rohrförmigen Elements untergebracht ist und antioxidative, antibiotische Stoffe etc. trägt.

19. Vorrichtung nach Anspruch 16, **dadurch gekennzeichnet, dass** eine Vielzahl der ergänzenden Vorrichtungen stromaufwärts des Hohlkörpers miteinander funktionell in Reihe verbindbar ist.

20. Vorrichtung nach Anspruch 1, **dadurch gekennzeichnet, dass** die Molekularstruktur des Bindemittels mindestens eine Struktur von einem einzelnen Kohlenstoff-, Schwefel- oder Stickstoffatom oder einer Kette von linearen Kohlenstoffatomen, verzweigt, gesättigt, einfach ungesättigt oder mehrfach ungesättigt einschließlich mit Hetero-Atomen substituiert aufweist.

21. Verfahren zur Herstellung einer Vorrichtung zum Reinigen organischer Moleküle (O), die ausgewählt sind aus Mykotoxinen, Antibiotika, Vitaminen, anabolen Steroiden, Steroiden, Beta-Agonisten, enthaltend die folgenden Schritte:
- Bereitstellen eines Hohlkörpers (2) mit im Wesentlichen länglicher Form, der an den Enden offen ist und in seinem Inneren mindestens einen Durchgangskanal für ein die organischen Moleküle (O) enthaltendes Fluidgemisch (M) bildet;
- Zuführen einer vordefinierten Menge eines permeablen Basismaterials (3); und
- Verbinden eines chemischen Wirkstoffs (5) mit dem permeablen Basismaterial (3), um einen funktionalisierten permeablen Träger (S) herzustellen, der innerhalb des Hohlkörpers (2) unterzubringen ist, welcher chemische Wirkstoff (5) dafür geeignet ist, während des Durchlaufs des Gemisches (M) wenigstens einen Typ der organischen Moleküle (0) festzuhalten,
wobei der Verbindungsschritt eine chemische Reaktion zwischen einer ersten funktionellen Gruppe an der Molekularstruktur des chemischen Wirkstoffs (5) und einer zweiten funktionellen Gruppe an mindestens einer der Molekularstruktur des permeablen Basismaterials (3) und der Molekularstruktur eines Bindemittels (4) umfasst, welches zwischen dem permeablen Basismaterial (3) und dem chemischen Wirkstoff (5) platziert ist,
welches Verfahren **dadurch gekennzeichnet ist, dass** der chemische Wirkstoff ein Antikörper ist, die erste funktionelle Gruppe eine aminische funktionelle Gruppe ist und die zweite funktionelle Gruppe eine succinimidische funktionelle Gruppe ist,
wodurch die Vorrichtung (1) die Durchführung einer Vielzahl von Prozessen zum Reinigen der organischen Moleküle (O) erlaubt.

22. Verfahren nach Anspruch 21, bei welchem die aminische funktionelle Gruppe eine primäre, sekundäre oder tertiäre aminische Gruppe mit der allgemeinen Formel -NH2, -NHR bzw. -NRR' ist und die succinimidische funktionelle Gruppe dem Typ entspricht, der in einem N-Hydroxysuccinimid-Ester (NHS) oder anderen ähnlichen Verbindungen vorhanden ist.

23. Verfahren nach einem oder mehreren der Ansprüche 21 und 22, **dadurch gekennzeichnet, dass** das Zuführen die Probenahme einer vorbestimmten Menge des permeablen Basismaterials und das Aktivieren der Oberfläche des permeablen Basismaterials umfasst.

24. Verfahren nach einem oder mehreren der Ansprüche 21 bis 23, **dadurch gekennzeichnet, dass** das Aktivieren die zugabe einer Lösung enthält, welche eine vorbestimmte Menge von N-Ethyl-N'-dimethylaminopropyl-carbodiimid (EDC) und eine vorbestimmte Menge von N-Hydroxysuccinimid (NHS) oder dergleichen enthält.

25. Verfahren nach einem oder mehreren der Ansprüche 21 bis 24, **dadurch gekennzeichnet, dass** es das Zentrifugieren des permeablen Basismaterials enthält.

26. Verfahren nach einem oder mehreren der Ansprüche 21 bis 25, **dadurch gekennzeichnet, dass** es das Zentrifugieren des permeablen Basismaterials, welches das Bindemittel aufweist, enthält.

27. Verfahren nach einem oder mehreren der Ansprüche 21 bis 26, **dadurch gekennzeichnet, dass** es das Belassen des chemischen Wirkstoffs in Kontakt mit dem Bindemittel für eine vordefinierte Zeit enthält.

28. Verfahren nach einem oder mehreren der Ansprüche 21 bis 27, **dadurch gekennzeichnet, dass** es das Belassen des chemischen Wirkstoffs in Kontakt mit dem permeablen Basismaterial für eine vordefinierte Zeit enthält.

29. Verfahren nach einem oder mehreren der Ansprüche 21 bis 28, **dadurch gekennzeichnet, dass** es das Einführen einer vordefinierten Menge des funktionalisierten permeablen Trägers in das Innere eines Hohlkörpers mit im Wesentlichen länglicher Form, der an den Enden offen ist, durch mindestens einen Durchgangskanal für ein Fluidgemisch enthält.

30. Verfahren nach einem oder mehreren der Ansprüche 21 bis 29, **dadurch gekennzeichnet, dass** das permeable Basismaterial dem Typ eines im Wesentlichen festen porösen Materials entspricht.

31. Verfahren nach einem oder mehreren der Ansprüche 21 bis 30, **dadurch gekennzeichnet, dass** das permeable Basismaterial ausgewählt ist aus der Gruppe enthaltend: Agarose, Metalle, Halbmetalle oder Metalloxide, Proteine oder Peptide.

## Revendications

1. Dispositif (1) pour la purification de molécules organiques (O) choisies parmi les mycotoxines, les antibiotiques, les vitamines, les stéroïdes anabolisants, les stéroïdes, les bêta-agonistes, comprenant :
un corps creux (2) de forme essentiellement allongée, ouvert aux extrémités et définissant intérieurement au moins un conduit de passage pour un mélange fluide (M) contenant lesdites molécules organiques (O),
au moins un support perméable fonctionnalisé (S), logé à l'intérieur dudit conduit et pourvu d'un matériau perméable (3) de base auquel est associé au moins un agent chimique (5) apte au piégeage, pendant le passage dudit mélange (M), desdites molécules organiques (O) à purifier,
dans lequel ledit agent chimique (5) est associé audit matériau perméable (3) de base par réaction chimique entre un premier groupement fonctionnel présent sur la structure moléculaire dudit agent chimique (5) et un deuxième groupement fonctionnel présent sur au moins l'une d'entre la structure moléculaire dudit matériau perméable (3) de base et la structure moléculaire d'un liant (4) placé entre ledit matériau perméable (3) de base et ledit agent chimique (5),
***caractérisé en ce que*** ledit agent chimique est un anticorps, ledit premier groupement fonctionnel est un groupement fonctionnel amino et ledit deuxième groupement fonctionnel est un groupement fonctionnel succinimide,
ledit dispositif (1) permettant la réalisation d'une pluralité de procédés pour la purification desdites molécules organiques (O).

2. Dispositif selon la revendication 1, ***caractérisé en ce que*** ledit groupement fonctionnel amino est un groupement amino primaire, secondaire ou tertiaire, respectivement de formule générale NH₂, NHR et -NRR', et ledit groupement fonctionnel succinimide est du type présent dans un ester de N-hydroxysuccinimide (NHS) ou autres composés similaires.

3. Dispositif selon la revendication 1, ***caractérisé en ce que*** ledit matériau perméable de base est du type matériau essentiellement solide et poreux.

4. Dispositif selon la revendication 1, ***caractérisé en ce que*** ledit matériau perméable de base est choisi dans le groupe comprenant : l'agarose, les métaux, les semi-métaux ou les oxydes métalliques, les protéines ou les peptides.

5. Dispositif selon la revendication 1, ***caractérisé en ce que*** ledit matériau perméable de base comprend du gel d'agarose modifié.

6. Dispositif selon la revendication 1, ***caractérisé en ce que*** ledit corps creux comprend au moins une première ouverture pour l'entrée dudit mélange.

7. Dispositif selon la revendication 1, ***caractérisé en ce que*** ledit corps creux comprend au moins une deuxième ouverture pour la sortie dudit mélange privé desdites molécules organiques piégées.

8. Dispositif selon la revendication 1, ***caractérisé en ce que*** ledit corps creux possède une forme essentiellement cylindrique.

9. Dispositif selon la revendication 1, ***caractérisé en ce que*** ledit corps creux est réalisé en matériau polymère.

10. Dispositif selon la revendication 1, ***caractérisé en ce qu'**il* comprend des moyens de blocage pour bloquer ledit matériau perméable de base à l'intérieur dudit conduit.

11. Dispositif selon la revendication 10, ***caractérisé en ce que*** lesdits moyens de blocage comprennent au moins une membrane poreuse installée à l'intérieur et à la mesure dudit conduit, à proximité dudit matériau perméable de base.

12. Dispositif selon la revendication 11, ***caractérisé en ce que*** lesdits moyens de blocage comprennent au moins deux dites membranes poreuses installées à l'intérieur dudit conduit au niveau de surfaces opposées dudit matériau perméable de base.

13. Dispositif selon la revendication 1, ***caractérisé en ce que*** ledit corps creux contient un fluide stabilisateur apte à maintenir des conditions chimiques adaptées dans ledit conduit avant le passage dudit mélange fluide.

14. Dispositif selon les revendications 6 et 7, ***caractérisé en ce qu'**il* comprend des moyens de fermeture étanche pour fermer au moins l'une d'entre ladite première ouverture et ladite deuxième ouverture.

15. Dispositif selon la revendication 14, ***caractérisé en ce que*** lesdits moyens de fermeture étanche sont du type bouchon ou similaire.

16. Dispositif selon la revendication 1, ***caractérisé en ce qu'**il* peut être associé à au moins un dispositif supplémentaire pour pré-purifier ledit mélange.

17. Dispositif selon la revendication 16, ***caractérisé en ce que*** ledit dispositif supplémentaire comprend une gaine essentiellement tubulaire, apte au passage dudit mélange fluide et ayant au moins une extrémité associable à ladite première ouverture.

18. Dispositif selon la revendication 16, ***caractérisé en ce que*** ledit dispositif supplémentaire comprend au moins un élément perméable logé à l'intérieur dudit élément tubulaire et supportant des substances anti-oxydantes, antibiotiques, etc.

19. Dispositif selon la revendication 16, ***caractérisé en ce* qu'**une pluralité de dits dispositifs supplémentaires sont fonctionnellement associables les uns avec les autres, en série, en amont dudit corps creux.

20. Dispositif selon la revendication 1, ***caractérisé en ce que*** la structure moléculaire dudit liant comprend au moins l'un d'entre un atome unique de carbone, de soufre ou d'azote, ou une chaine linéaire, ramifiée, saturée, mono-insaturée, ou poly-insaturée, d'atomes de carbone, y compris substituée par des hétéroatomes.

21. Procédé de fabrication d'un dispositif pour la purification de molécules organiques (O) choisies parmi les mycotoxines, les antibiotiques, les vitamines, les stéroïdes anabolisants, les stéroïdes, les bêta-agonistes, comprenant les étapes suivantes :
- mise à disposition d'un corps creux (2) de forme essentiellement allongée, ouvert aux extrémités et définissant intérieurement au moins un conduit de passage pour un mélange fluide (M) contenant lesdites molécules organiques (O),
- fourniture d'une quantité prédéfinie d'un matériau perméable (3) de base ; et
- association d'un agent chimique (5) avec ledit matériau perméable (3) de base pour réaliser un support perméable fonctionnalisé (S) qui sera placé dans ledit corps creux (2), ledit agent chimique (5) étant apte à piéger au moins un type desdites molécules organiques (O) lors du passage dudit mélange (M),
dans lequel ladite étape d'association comprend une réaction chimique entre un premier groupement fonctionnel présent sur la structure moléculaire dudit agent chimique (5) et un deuxième groupement fonctionnel présent sur au moins l'une d'entre la structure moléculaire dudit matériau perméable (3) de base et la structure moléculaire d'un liant (4) placé entre ledit matériau perméable (3) de base et ledit agent chimique (5),
ledit procédé étant ***caractérisé en ce que*** ledit agent chimique est un anticorps, ledit premier groupement fonctionnel est un groupement fonctionnel amino et ledit deuxième groupement fonctionnel est un groupement fonctionnel succinimide,
ledit dispositif (1) permettant la réalisation d'une pluralité de procédés pour la purification desdites molécules organiques (O).

22. Procédé selon la revendication 21, dans lequel ledit groupement fonctionnel amino est un groupement amino primaire, secondaire ou tertiaire, respectivement de formule générale -NH₂, -NHR et -NRR', et ledit groupement fonctionnel succinimide est du type présent dans un ester de N-hydroxysuccinimide (NHS) ou autres composés similaires.

23. Procédé selon l'une ou plusieurs des revendications 21 et 22, ***caractérisé en ce que*** ladite étape de fourniture comprend l'échantillonnage d'une quantité prédéfinie dudit matériau perméable de base et l'activation de la surface dudit matériau perméable de base.

24. Procédé selon l'une ou plusieurs des revendications 21 à 23, ***caractérisé en ce que*** ladite activation comprend l'ajout d'une solution comprenant une quantité prédéfinie de N-éthyl-N'-diméthylaminopropyl-carbodimide (EDC) et une quantité prédéfinie de N-hydroxysuccinimide (NHS) ou similaire.

25. Procédé selon l'une ou plusieurs des revendications 21 à 24, ***caractérisé en ce qu'**il* comprend la centrifugation dudit matériau perméable de base.

26. Procédé selon l'une ou plusieurs des revendications 21 à 25, ***caractérisé en ce qu'**il* comprend la centrifugation dudit matériau perméable de base contenant ledit liant.

27. Procédé selon l'une ou plusieurs des revendications 21 à 26, ***caractérisé en ce qu'**il* comprend la mise en contact dudit agent chimique avec ledit liant pendant une durée prédéfinie.

28. Procédé selon l'une ou plusieurs des revendications 21 à 27, ***caractérisé en ce qu'**il* comprend la mise en contact dudit agent chimique avec ledit matériau perméable de base pendant une durée prédéfinie.

29. Procédé selon l'une ou plusieurs des revendications 21 à 28, ***caractérisé en ce qu'**il* comprend l'introduction d'une quantité prédéfinie dudit support perméable fonctionnalisé à l'intérieur d'un corps creux, de forme essentiellement allongée et ouvert aux extrémités par au moins un conduit de passage pour un mélange fluide.

30. Procédé selon l'une ou plusieurs des revendications 21 à 29, ***caractérisé en ce que*** ledit matériau perméable de base est du type matériau essentiellement solide et poreux.

31. Procédé selon l'une ou plusieurs des revendications 21 à 29, ***caractérisé en ce que*** ledit matériau perméable de base est choisi dans le groupe comprenant : l'agarose, les métaux, les semi-métaux ou les oxydes métalliques, les protéines ou les peptides.
